# EUROPEAN PATENT APPLICATION

(11) **EP 3 984 718 A1**
(43) Date of publication of application: **20.04.2022**
(21) Application number: 21172383.8
(22) Date of filing: 06.05.2021
(51) Int. Cl.: B29C 45/06, B29C 44/08, B29C 44/10, B29C 44/58, B29C 45/16, B29C 45/17, B29K 83/00, B29K 105/04

(54) **INJECTION MOLDING APPARATUS AND INJECTION MOLDING METHOD**

(30) Priority: 14.10.2020 TW 109135453
(71) Applicant: Chung Yuan Christian University, Taoyuan City 32023 (TW)
(72) Inventor: CHEN, Shia-Chung, 32023 Taoyuan City (TW); CHANG, Yung-Hsiang, 32023 Taoyuan City (TW); CHANG, Che-Wei, 32023 Taoyuan City (TW); TSAI, Pi-Lin, 32023 Taoyuan City (TW)
(74) Representative: Becker, Eberhard

(57) **Abstract**

The disclosure provides an injection molding apparatus (100), including a mold unit (110, 110A), an injecting unit, and a counter pressure unit (130). The mold unit (110, 110A) is adapted to provide a first cavity (110a) and a second cavity (110b). The injecting unit is adapted to inject a first material into the first cavity (110a) to form a first molded object (B1). The second cavity (110b) is adapted to accommodate the first molded object (B1). The injecting unit is adapted to inject a second material into the second cavity (110b) to form a second molded object (B2), such that the first molded object (B1) and the second molded object (B2) in the second cavity (110b) are combined. The second material is a foaming material. And the counter pressure unit (130) is adapted to provide gas into the second cavity (110b) to increase the pressure in the second cavity (110b).

## Description

### BACKGROUND

### Technical Field

The present disclosure relates to a molding apparatus and a molding method, particularly to an injection molding apparatus and an injection molding method.

### Description of Related Art

As a new technique in injection molding, microcellular injection molding is capable of reducing the weight of products and the amount of materials consumed, granting the products better mechanical and temperature properties. Since a good control over foam uniformity is the key to a satisfying yield, generally, the counter pressure technique is employed to suppress and unify the foaming of the material. However, when producing a product with a greater thickness by using the microcellular injection molding technique, it is difficult for the product material farer from the product surface to be affected by the counter pressure, causing the foam to be formed unevenly.

### SUMMARY

The disclosure provides an injection molding apparatus and an injection molding method, capable of forming uniform foam for products of a foaming material with a greater thickness.

The injection molding apparatus of the present disclosure includes a mold unit, an injecting unit, and a counter pressure unit. The mold unit is adapted to provide a first cavity and a second cavity. The injecting unit is adapted to inject a first material into the first cavity to form a first molded object. The second cavity is adapted to accommodate the first molded object. The injecting unit is adapted to inject a second material into the second cavity to form a second molded object, such that the first molded object and the second molded object in the second cavity are combined. The second material is a foaming material. And the counter pressure unit is adapted to provide gas into the second cavity to increase pressure in the second cavity.

In an embodiment of the present disclosure, the second material includes a soft foaming material.

In an embodiment of the present disclosure, the second material includes a liquid silicone.

In an embodiment of the present disclosure, the first material is the same as the second material.

In an embodiment of the present disclosure, the first material is different from the second material.

In an embodiment of the present disclosure, the counter pressure unit is adapted to provide gas into the first cavity to increase the pressure in the first cavity.

In an embodiment of the present disclosure, the mold unit includes a first mold and a second mold. The first mold has a first cavity, and the second mold has a second cavity.

In an embodiment of the present disclosure, the mold unit includes a first part and a second part. The first part has a first recess, and the second part has a second recess adapted to rotate relative to the first part. When the second part rotates relative to the first part such that the second recess is covered by the first part and is misaligned with the first recess, the second recess forms the first cavity. And when the second part rotates relative to the first part such that the second recess is aligned with the first recess, the first recess and the second recess together form a second cavity.

The injection molding method of the present disclosure includes the following steps: injecting a first material by an injection unit into a first cavity to form a first molded object; accommodating the first molded object in a second cavity; injecting a second material by the injection unit into the second cavity to form a second molded object, such that the first molded object and the second molded object in the second cavity are combined, in which the second material is a foaming material; and providing gas by a counter pressure unit into the second cavity to increase the pressure in the second cavity.

In an embodiment of the present disclosure, the second material includes a soft foaming material.

In an embodiment of the present disclosure, the second material includes a liquid silicone.

In an embodiment of the present disclosure, the first material is the same as the second material.

In an embodiment of the present disclosure, the first material is different from the second material.

In an embodiment of the present disclosure, the injection molding method further includes providing gas into a first cavity by using a counter pressure unit to increase the pressure in the first cavity.

Based on the above, the present disclosure adapts a two-stage injection molding process to produce sequentially the first molded product and the second molded product, such that the first molded product and the second molded product may be combined in a laminated manner to form a product with a great thickness. When the molded object is made of a foaming material, since the molded object only constitutes a part of the product and has a lesser thickness, the foaming of the inner material may be suppressed easily by the counter pressure, such that the foam is formed uniformly.

### BRIEF DESCRIPTION OF THE DRAWINGS

FIG. 1 is a schematic view of an injection molding apparatus according to an embodiment of the present disclosure.
FIG. 2 is a schematic view of the mold unit of FIG. 1.
FIG. 3A to FIG. 3C illustrate the process of injecting a material by an injection unit into the mold unit of FIG. 2.
FIG. 4 is a flowchart of an injection molding method according to an embodiment of the present disclosure.
FIG. 5 is a schematic view of a mold unit according to another embodiment of the present disclosure.
FIG. 6A to FIG. 6C illustrate the process of injecting a material by an injection unit into the mold unit of FIG. 5.

### DESCRIPTION OF THE EMBODIMENTS

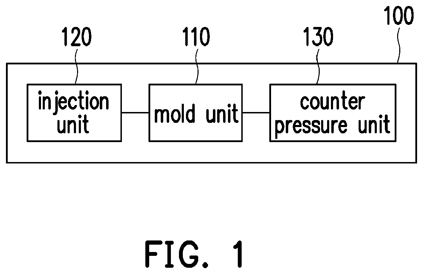

FIG. 1 is a schematic view of an injection molding apparatus according to an embodiment of the present disclosure. In FIG. 1, an injection molding apparatus 100 of the present embodiment includes a mold unit 110, an injection unit 120, and a counter pressure unit 130. The injection unit 120 is adapted to inject a material into the mold unit 110, and the counter pressure unit 130 is adapted to apply counter pressure on the mold unit 110.

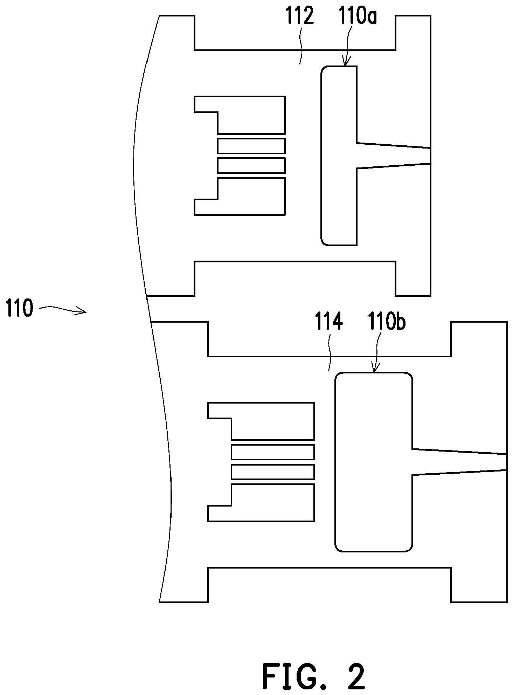

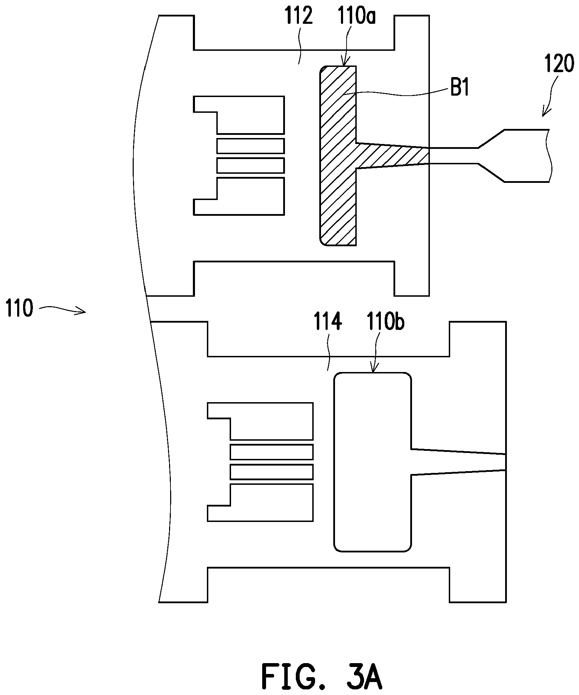

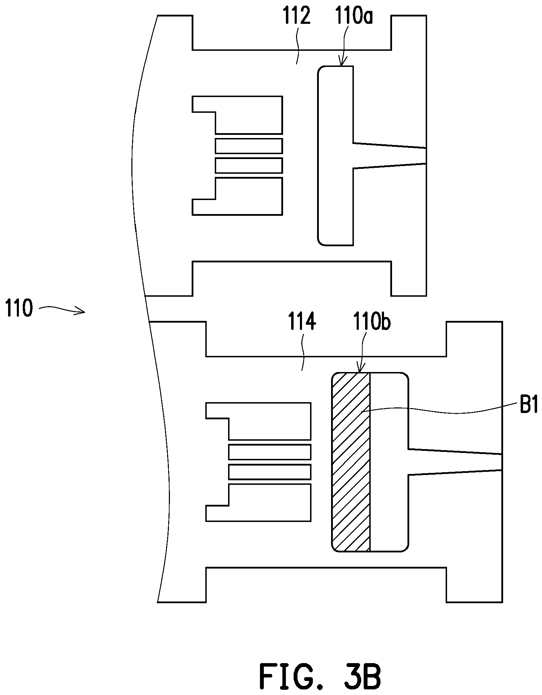

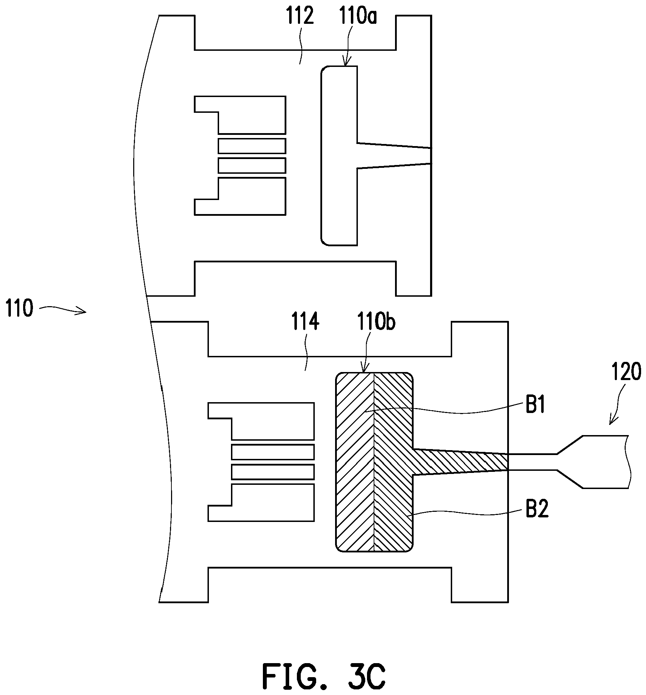

FIG. 2 is a schematic view of the mold unit of FIG. 1. FIG. 3A to FIG. 3C illustrate the process of injecting a material by an injection unit into the mold unit of FIG. 2. The mold unit 110 is adapted to provide a first cavity 110a and a second cavity 110b as shown in FIG. 2. The injection unit 120 is adapted to inject a first material into the first cavity 110a as shown in FIG. 3A to form a first molded object B1. The second cavity 110b is adapted to accommodate the first molded object B1 as shown in FIG. 3B. The injection unit 120 is adapted to inject a second material into the second cavity 110b as shown in FIG. 3C to form a second molded object B2, such that the first molded object B1 and the second molded object B2 in the second cavity 110b may be combined with each other.

The first material and the second material may be, for example, the same, and they may include a soft foaming material or liquid silicone. The counter pressure unit 130 (as shown in FIG. 1) is adapted to provide gas to the first cavity 110a and the second cavity 110b to increase the pressure in the first cavity 110a and the second cavity 110b, such that the material may foam uniformly. In other embodiments, the first material may also be different from the second material, and the first material may also be a non-foaming material, to which the present disclosure is not limited. In the case where the first material is a non-foaming material, it is acceptable for the counter pressure unit 130 to not apply counter pressure on the first cavity 110a. The process of the corresponding injection molding method is described below in corporation with the drawings.

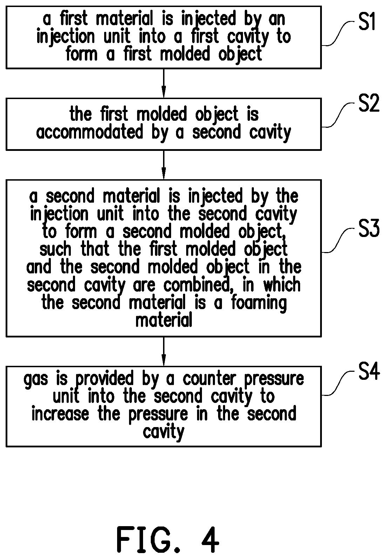

FIG. 4 is a flowchart of an injection molding method according to an embodiment of the present disclosure. In FIG. 4, first, the first material is injected by the injection unit 120 into the first cavity 110a to form the first molded object B1 as shown in FIG. 3A (step S1). Next, as shown in FIG. 3B, the first molded object B1 is accommodated by the second cavity 110b (step S2). The second material is injected by the injection unit 120 into the second cavity 110b to form the second molded object B2 as shown in FIG. 3C, such that the first molded object B1 and the second molded object B2 in the second cavity 110b are combined, in which the second material is a foaming material (step S3). Gas is provided by the counter pressure unit 130 into the second cavity 110b to increase the pressure in the second cavity 110b (step S4).

As described above, in the present embodiment, the first molded product B1 and the second molded product B2 are sequentially produced by using a two-stage injection molding process, such that the first molded product B1 and the second molded product B2 are combined in a laminated manner and together form a product with a great thickness. When the molded object is made of a foaming material, since the molded object only constitutes a part of the product and has a lesser thickness, the foaming of the inner material may be suppressed easily by the counter pressure, such that the foam is formed uniformly. In other words, this embodiment combines the counter pressure technique with the two-stage laminating injection molding technique to make the two techniques reciprocal to each other, such that the foamed product with a great thickness has good foaming uniformity during the injection molding process. This is an effect unachievable in a process that only involves the counter pressure technique without adopting the two-stage laminating injection molding technique, or one that involves only the two-stage laminating injection molding technique without adopting the counter pressure technique.

Specifically, in FIG. 2, the mold unit 110 of this embodiment includes a first mold 112 and a second mold 114. The first mold 112 has the first cavity 110a, and the second mold 114 has the second cavity 110b. In other words, the first cavity 110a and the second cavity 110b are provided respectively by two molds (the first mold 112 and the second mold 114). However, the present disclosure is not limited to the formality of the mold unit 110, whose exemplary examples are described as follows in corporation with the drawings.

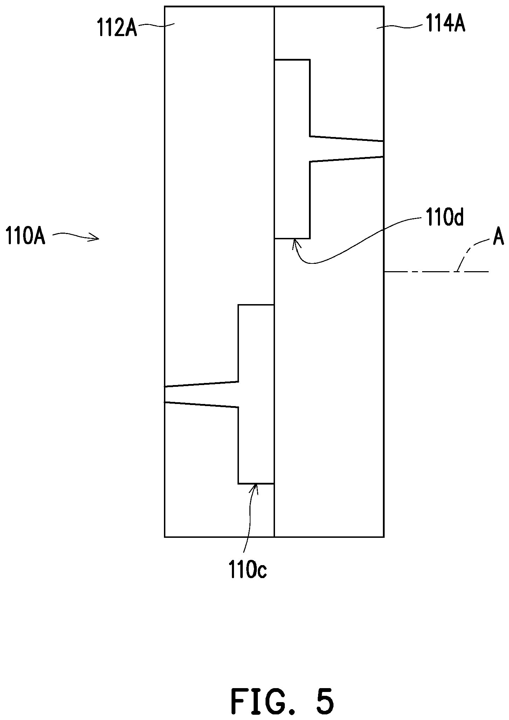

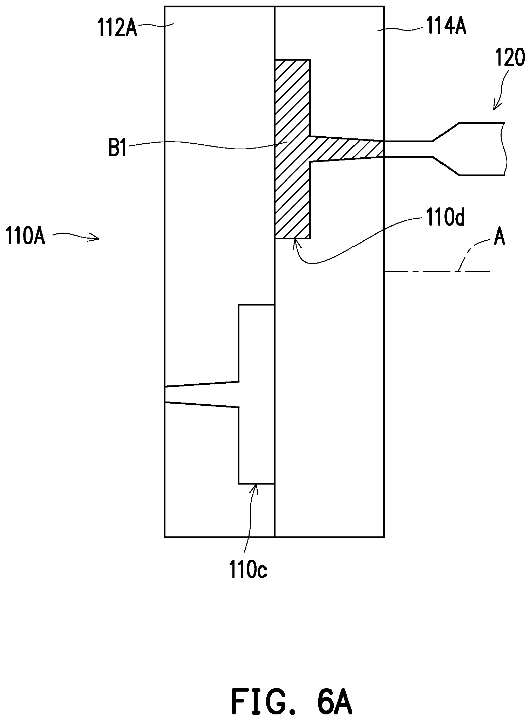

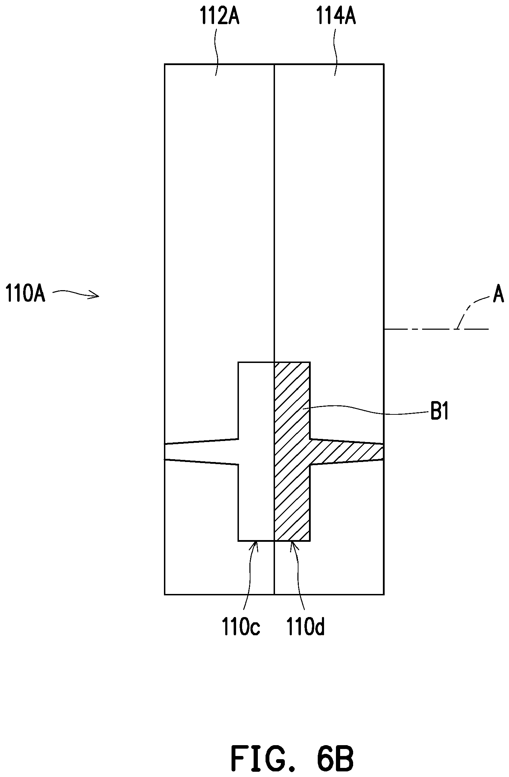

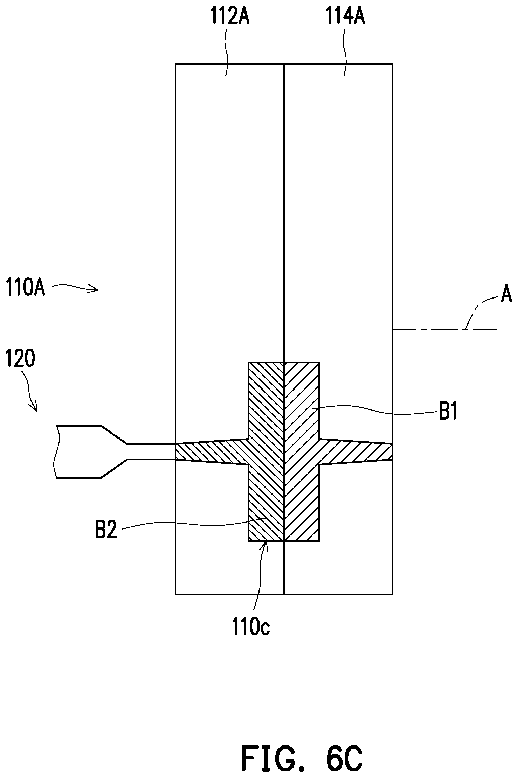

FIG. 5 is a schematic view of a mold unit according to another embodiment of the present disclosure. FIG. 6A to FIG. 6C illustrate the process of injecting a material by an injection unit into the mold unit of FIG. 5. The differences between the embodiment of FIG. 5 and the embodiment of FIG. 2 are described as follows. The mold unit 110A of FIG. 5 includes a first part 112A and a second part 114A. The first part 112A has a first recess 110c whereas the second part 114A has a second recess 110d adapted to rotate along a rotation axis A relative to the first part 112A. When the second part 114A rotates relative to the first part 112A such that the second recess 110d is covered by the first part 112A and misaligned with the first recess 110c as shown in FIG. 5, the second recess 110d constitutes a first cavity. At this time, it is suitable for the injection unit 120 to inject a first material into the first cavity as shown in FIG. 6A to form the first molded object B1. When the second part 114A rotates relative to the first part 112A such that the second recess 110d is aligned with the first recess 110c as shown in FIG. 6B, the first recess 110c and the second recess 110d together form a second cavity. At this time, the first molded object B1 is located in the second cavity, and it is suitable for the injection unit 120 to inject the second material into the second cavity as shown in FIG. 6C to form the second molded object B2, such that the first molded object B1 and the second molded object B2 in the second cavity 110b are combined.

In summary, the present disclosure adapts a two-stage injection molding process to sequentially produce the first molded product and the second molded product, such that the first molded product and the second molded product are combined in a laminated manner to form a product with a great thickness. When the molded object is made of a foaming material, since the molded object only constitutes a part of the product and has a lesser thickness, the foaming of the inner material may be suppressed easily by the counter pressure, such that the foam is formed uniformly.

## Claims

1. An injection molding apparatus (100), comprising:
a mold unit (110, 110A), adapted to provide a first cavity (110a) and a second cavity (110b);
an injection unit (120), adapted to inject a first material into the first cavity (110a) to form a first molded object (B1), wherein the second cavity (110b) is adapted to accommodate the first molded object (B1), and the injection unit (120) is adapted to inject a second material into the second cavity (110b) to form a second molded object (B2), such that the first molded object (B1) and the second molded object (B2) in the second cavity (110b) are combined, wherein the second material is a foaming material; and
a counter pressure unit (130), adapted to provide gas into the second cavity (110b) to increase pressure in the second cavity (110b).

2. The injection molding apparatus (100) according to claim 1, wherein the second material comprises a soft foaming material.

3. The injection molding apparatus (100) according to claim 1, wherein the second material comprises a liquid silicone.

4. The injection molding apparatus (100) according to claim 1, wherein the first material is the same with the second material.

5. The injection molding apparatus (100) according to claim 1, wherein the first material is different from the second material.

6. The injection molding apparatus (100) according to claim 1, wherein the counter pressure unit (130) is adapted to provide gas into the first cavity (110a) to increase a pressure in the first cavity (110a).

7. The injection molding apparatus (100) according to claim 1, wherein the mold unit (110, 110A) comprises a first mold (112) and a second mold (114), the first mold (112) comprises the first cavity (110a), and the second mold (114) comprises the second cavity (110b).

8. The injection molding apparatus (100) according to claim 1, wherein: the mold unit (110, 110A) comprises a first part (112A) and a second part (114A); the first part (112A) comprises a first recess (110c), and the second part (114A) comprises a second recess (110d) adapted to rotate relative to the first part (112A); when the second part (114A) rotates relative to the first part (112A) and the second recess (110d) is covered by the first part (112A) and is misaligned with the first recess (110c), the second recess (110d) forms the first cavity (110a); and when the second part (114A) rotates relative to the first part (112A) and the second recess (110d) is aligned with the first recess (110c), the first recess (110c) and the second recess (110d) form the second cavity (110b).

9. An injection molding method, comprising:
injecting a first material by an injection unit (120) into a first cavity (110a) to form a first molded object (B1);
accommodating the first molded object (B1) in a second cavity (110b);
injecting a second material by the injection unit (120) into the second cavity (110b) to form a second molded object (B2) such that the first molded object (B1) and the second molded object (B2) in the second cavity (110b) are combined, wherein the second material is a foaming material; and
providing gas by a counter pressure unit (130) into the second cavity (110b) to increase a pressure in the second cavity (110b).

10. The injection molding method according to claim 9, wherein the second material comprises a soft foaming material.

11. The injection molding method according to claim 9, wherein the second material comprises a liquid silicone.

12. The injection molding method according to claim 9, wherein the first material is the same with the second material.

13. The injection molding method according to claim 9, wherein the first material is different from the second material.

14. The injection molding method according to claim 9, further comprising providing gas by the counter pressure unit (130) into the first cavity (110a) to increase a pressure in the first cavity (110a).
